# EUROPEAN PATENT APPLICATION

(11) **EP 2 175 589 A1**
(43) Date of publication of application: **14.04.2010**
(21) Application number: 09804460.5
(22) Date of filing: 12.05.2009
(51) Int. Cl.: H04L 12/26

(54) **CONTENT CONTROL METHOD AND DEVICE**

(30) Priority: 04.08.2008 CN 200810117740
(71) Applicant: Huawei Technologies Co., Ltd., Shenzhen, Guangdong 518129 (CN)
(72) Inventor: LIU, Yijun, Shenzhen Guangdong 518129 (CN); GAO, Hongtao, Shenzhen Guangdong 518129 (CN)
(74) Representative: Körber, Martin Hans
(86) International application number: PCT/CN2009/071749
(87) International publication number: WO 2010/015160

(57) **Abstract**

A content control method and device are provided. A method is as follows. A monitoring device sends a first acquisition request message carrying identification information to a content identity manager (CIM) to request attribute metadata and a registered fingerprint corresponding to the identification information when a first cumulative transmission amount of a content whose identification information is acquirable detected by the monitoring device in a first preset time period reaches a first preset threshold. The monitoring device acquires the attribute metadata and the registered fingerprint corresponding to the identification information returned by the CIM. Thus, at multiple concurrent accesses of the same content in any time periods, the monitoring device does not need to request the related policy control attribute metadata from the CIM each time, so that interactive processing for the repeated content with a high concurrent rate between the monitoring device and the CIM is reduced, thereby reducing resource loss of a network and the CIM.

## Description

### FIELD OF THE TECHNOLOGY

The present invention relates to the field of communication technology, and more particularly to a content control method and device.

### BACKGROUND

The secure content identification mechanism (SCIDM) is adapted to identify content and then perform control according to a predefined policy control rule in content transmission. The main architecture of the SCIDM is as follows: a monitor entity (ME) detects the transmission of the content, content-related attribute metadata is acquired from a content identity manager (CIM), and related policy control is performed on the detected content according to the acquired attribute metadata.

In the basic framework of the SCIDM, the ME needs to interact with the CIM to perform the predefined policy control on the content. Normally, when detecting the transmission of the content, the ME sends an ID of the content and/or some attribute values of the content itself to the CIM, for example, sends an extracted fingerprint of the content, so as to request the attribute metadata of the content related to the predefined policy control rule in the ME. The ME performs related policy control on the detected content based on the predefined policy control rule according to the returned attribute metadata.

In the implementation of the present invention, at least the following problem exists in the prior art. The ME must send a request to the CIM to acquire related policy control attribute metadata upon detecting a content each time, and these repeated requests of the ME increase the resource loss of the network and the CIM.

### SUMMARY

Accordingly, embodiments of the present invention provide a content control method and device, thereby achieving the following efficacy. At multiple concurrent accesses of a same content in any time period, a monitoring device does not need to request the related policy control attribute metadata from a CIM each time, so that interactive processing for the repeated content with a high concurrent rate between the monitoring device and the CIM is reduced, thereby reducing resource loss of a network and the CIM.

The embodiments of the present invention provide a content control method. The method includes the following steps.

When a first cumulative transmission amount of a content whose identification information is acquirable detected by a monitoring device in a first preset time period reaches a first preset threshold, the monitoring device sends a first acquisition request message carrying the identification information to a CIM to request attribute metadata and a registered fingerprint corresponding to the identification information.

The monitoring device acquires the attribute metadata and the registered fingerprint corresponding to the identification information returned by the CIM.

The embodiments of the present invention provide another content control method. The method includes the following step.

When a third cumulative transmission amount of a second acquisition request message received by the CIM in a third preset time period reaches a third preset threshold, in which the second acquisition request message requests the attribute metadata corresponding to the identification information of a content and related to a predefined policy control rule, a CIM returns the attribute metadata and a registered fingerprint corresponding to the identification information to a monitoring device in a management domain of the CIM.

The embodiments of the present invention provide a monitoring device. The monitoring device includes a detecting module, a requesting module, and an acquiring module.

The detecting module is adapted to detect a content whose identification information is acquirable.

The requesting module is adapted to send a first acquisition request message carrying the identification information to a CIM to request the attribute metadata and a registered fingerprint corresponding to the identification information when a first cumulative transmission amount of the content whose identification information is acquirable detected by the detecting module in a first preset time period reaches a first preset threshold.

The acquiring module is adapted to acquire the attribute metadata and the registered fingerprint corresponding to the identification information returned by the CIM.

The embodiments of the present invention provide a CIM. The CIM includes a receiving module and a delivering module.

The receiving module is adapted to receive a second acquisition request message sent by a monitoring device, in which the second acquisition request message request the attribute metadata corresponding to identification information of a content and related to a predefined policy control rule.

The delivering module is adapted to return the attribute metadata and a registered fingerprint corresponding to the identification information of the content to the monitoring device in a management domain of the CIM when a third transmission amount of the second acquisition request message received by the receiving module in a third preset time period reaches a third preset threshold.

It is known from the above technical solutions that, in the embodiments of the present invention, the monitoring device requests all attribute metadata and the registered fingerprint corresponding to the identification information from CIM when the first cumulative transmission amount of the content detected in the first preset time period reaches the first preset threshold which is set in advance; or, the CIM delivers the attribute metadata and the registered fingerprint corresponding to the identification information to the monitoring device when the third cumulative transmission amount of the above second acquisition request messages received in the third preset time period reaches the third preset threshold, so that the monitoring device acquires all attribute metadata and the registered fingerprint of the content. Thus, the following efficacy can be achieved. At multiple concurrent accesses of the same content in subsequent time periods, the monitoring device does not need to request the related policy control attribute metadata from the CIM each time, so that the interactive processing for the repeated content with a high concurrent rate between the monitoring device and the CIM is reduced, thereby reducing the resource loss of the network and the CIM.

Specific embodiments of the present invention will be further illustrated in detail below with reference to the accompanying drawings.

### BRIEF DESCRIPTION OF THE DRAWINGS

FIG. 1 is a schematic flow chart of a content control method according to a first embodiment of the present invention;
FIG. 2 is a schematic flow chart of a content control method according to a second embodiment of the present invention;
FIG. 3 is a schematic flow chart of a content control method according to a third embodiment of the present invention;
FIG. 4 is a schematic flow chart of a content control method according to a fourth embodiment of the present invention;
FIG. 5 is a signaling flow chart of a content control method according to a fifth embodiment of the present invention;
FIG. 6 is a signaling flow chart of a content control method according to a sixth embodiment of the present invention;
FIG. 7 is a signaling flow chart of a content control method according to a seventh embodiment of the present invention;
FIG. 8 is a schematic structural view of a monitoring device according to an eighth embodiment of the present invention;
FIG. 9 is a schematic structural view of a monitoring device according to a ninth embodiment of the present invention; and
FIG. 10 is a schematic structural view of a CIM according to a tenth embodiment of the present invention.

### DETAILED DESCRIPTION

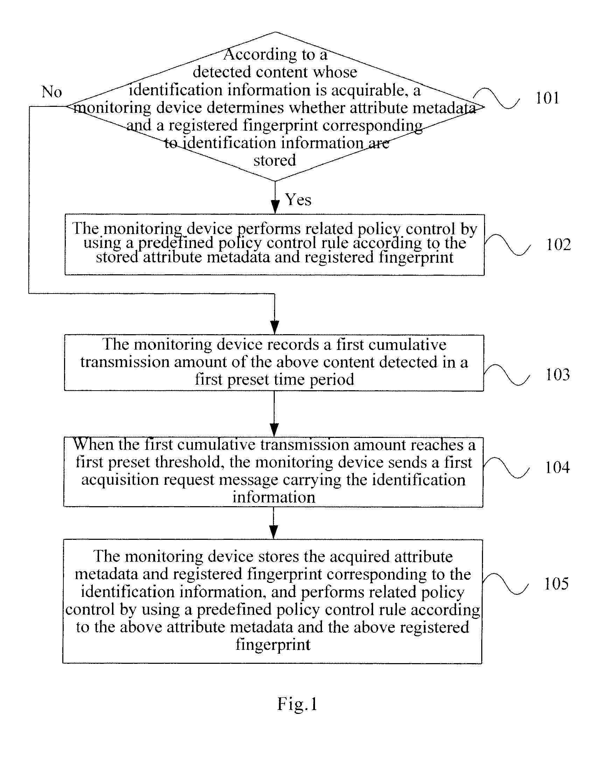

FIG. 1 is a schematic flow chart of a content control method according to a first embodiment of the present invention. As shown in FIG. 1, this embodiment may include the following steps.

In Step 101, according to a detected content whose identification information is acquirable, a monitoring device determines whether attribute metadata and a registered fingerprint corresponding to the above identification information are stored, and if yes, Step 102 is performed; otherwise, Step 103 is performed.

An inputted content ***Content*** detected by the monitoring device, for example, a certain content that a user requests to download from a website displayed on a page of the website, may carry or may not carry content identification information ***content_ID*.** When the content identification information is not carried, it can be acquired from a CIM.

In Step 102, the monitoring device performs related policy control on the detected content by using a predefined policy control rule stored in the monitoring device according to the above stored attribute metadata and registered fingerprint.

In Step 103, the monitoring device records a first cumulative transmission amount of the above content detected in a first preset time period.

A counter **ID_Content-1 (*content_ID*)** triggering a start rule in the monitoring device records the same content according to the identification information, and accumulates a transmission amount of the same content detected in the time period.

In Step 104, when the first cumulative transmission amount reaches a first preset threshold, the monitoring device sends a first acquisition request message carrying the above identification information to the CIM to request attribute metadata and a registered fingerprint corresponding to the above identification information.

When it is monitored that a cumulative transmission amount of the same content in the time period reaches a preset threshold ***Threshold_Time_{E}*,** a daemon thread in the monitoring device triggers a download rule, i.e., sending a new acquisition request message. That is, the monitoring device sends to the CIM the first acquisition request message for acquiring the attribute metadata and the registered fingerprint corresponding to the identification information, in which the first acquisition request message needs to be sent because the download rule is triggered, so as to request all attribute metadata ***attribute_metadata*** of the content and the registered fingerprint ***registed_fingerprint*** of the content on the CIM.

Further, the acquisition request message may also include a preset time period and a preset threshold ***Threshold_Time*** set by the monitoring device. If the acquisition request message sent by the monitoring device includes values of these parameter type, the CIM records the received thresholds of time and amount sent by the monitoring device, and converts them into a standard type of data by using a uniform unit, then stores these data as a variable attribute value of the content, i.e., an attribute metadata item, so that the monitoring device can perform policy control. If preset thresholds ***Threshold_Time*** from a plurality of monitoring devices exist, an average thereof may be calculated and then stored.

In Step 105, the monitoring device stores the acquired attribute metadata and registered fingerprint returned by the CIM, and performs related policy control on the detected content by using a predefined policy control rule according to the above acquired and stored attribute metadata and registered fingerprint.

The CIM returns to the monitoring device a data packet, which at least includes all attribute metadata ***attribute_metadata*** of the requested content and the registered fingerprint ***registed_fingerprint*** regarding the requested content. After successfully receiving all attribute metadata and the registered fingerprint of the requested content, the monitoring device locally completes the fingerprint comparison, the acquisition of attribute metadata, the policy control, and other operations of the content regarding the specific content.

This embodiment is a distributed control mode, in which when the monitoring device in an intermediate node state detects the transmission of a content, the content may be a content carrying identification information of the content or not carrying the identification information, and when the content does not carry the identification information, the monitoring device may request the related identification information from CIM. Thereby, the monitoring device stores some data such as a log for the transmission of the content, and the counter that disposed in the monitor entity, which can identify the identification information of the content, records times that the content flows through the monitoring device. When a cumulative transmission amount of the content recorded by the counter reaches a preset threshold in a set time period, a start rule is triggered, that is, the monitoring device initiates a first acquisition request to the CIM to request all attribute metadata and a registered fingerprint related to the content from the CIM, and downloads them to monitoring device itself for buffer. Afterwards, when the monitoring device detects the transmission of the content again, the monitoring device locally performs related policy control on the detected content by using a predefined policy control according to the attribute metadata and the registered fingerprint of the content, so that the monitoring device does not need to repeatedly interact with the CIM when the same repeated content with a high concurrent rate is transmitted.

In this embodiment, the monitoring device requests all attribute metadata and the registered fingerprint corresponding to the identification information from the CIM when the first cumulative transmission amount of the content detected in the first preset time period reaches the first preset threshold, so that the monitoring device acquires all attribute metadata and the registered fingerprint of the content, and thus the following efficacy can be achieved: When multiple concurrent accesses of the same content in time periods subsequent to the completion of the acquisition, the monitoring device does not need to request the related policy control attribute metadata from the CIM each time, so that the interactive processing for the repeated content with a high concurrent rate between the monitoring device and the CIM is reduced, thereby reducing the resource loss of the network and the CIM.

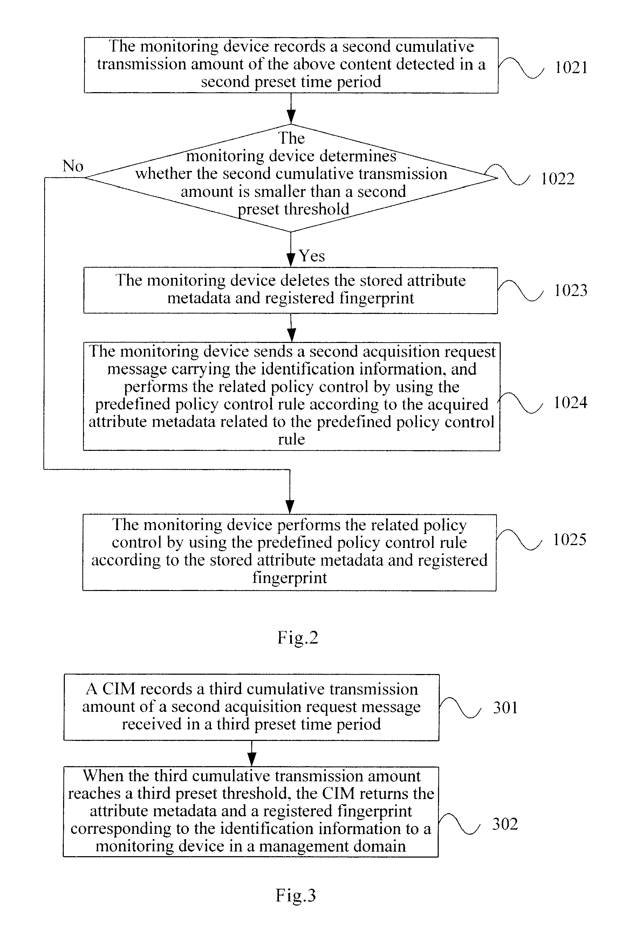

FIG. 2 is a schematic flow chart of a content control method according to a second embodiment of the present invention. As shown in FIG. 2, compared with the first embodiment, Step 102 may further include the following specific steps in this embodiment.

In Step 1021, the monitoring device records a second cumulative transmission amount of the content detected in a second preset time period.

In Step 1022, the monitoring device determines whether the second cumulative transmission amount is smaller than a second preset threshold, and if yes, Step 1023 and step 1024 are performed; otherwise, Step 1025 is performed.

Another counter **ID_Content-2 (*content_ID*)** triggering a close rule may also be disposed in the monitoring device. The counter may also record the same content according to identification information, and accumulate a transmission amount of the same content detected in the time period. The counter **ID_Content-2** triggering the close rule and the previous counter **ID_Content-1** triggering the start rule may be the same counter, or different counters for different rules. If they are the same counter, a threshold ***Threshold_Time_{D}*** of the counter triggering the close rule and the threshold ***Threshold_Time_{E}*** of the counter triggering the start rule may be the same value, i.e., the second preset threshold is equal to the first preset threshold, the start rule is triggered when the cumulative transmission amount is bigger than the threshold, while the close rule is triggered when the cumulative transmission amount is smaller than the threshold. If they are different counters, the threshold ***Threshold_Time_{D}*** of the counter triggering the close rule and the threshold ***Threshold_Time_{E}*** of the counter triggering the start rule may be set to different values.

In Step 1023, the monitoring device deletes the stored attribute metadata and registered fingerprint corresponding to the identification information.

In Step 1024, the monitoring device sends a second acquisition request message carrying the identification information to the CIM to request the attribute metadata corresponding to the above identification information and related to the predefined policy control rule, and performs the related policy control on the detected content by using the predefined policy control rule according to the above acquired attribute metadata related to the predefined policy control rule.

In Step 1025, the monitoring device performs the related policy control on the detected content by using the predefined policy control rule according to the stored attribute metadata and registered fingerprint corresponding to the identification information.

In this embodiment, when the cumulative transmission amount regarding the specific content accumulated by the counter triggering the close rule is lower than the preset threshold ***Threshold_Time*,** the close rule is triggered (***Trigger***), i.e., all attribute metadata, the registered fingerprint and other data for the specific content buffered locally in the monitoring device are deleted, and a normal content monitoring mode is recovered, in which when the transmission of content is detected, the attribute metadata related to the predefined policy control rule is requested from the CIM.

In this embodiment, after the monitoring device acquires all the attribute metadata and the registered fingerprint regarding the same content, the counter triggering the close rule and starts to accumulate the transmission amount of the content in the time period, or the counter triggering the start rule and continues accumulating the transmission amount of the content in the time period. When the cumulative transmission amount of the content is lower than the preset threshold at the end of the counting time period, the close rule is triggered, that is, all the attribute metadata and the registered fingerprint corresponding to the content (the identification information of the content) that buffered locally in the monitoring device are deleted, and original normal actions are recovered, i.e., when detecting the content, the monitoring device requests only the attribute metadata related to the predefined policy control rule from the CIM.

In the above embodiments of a content control method of the present invention, effective data management for dynamically monitoring a content with a high concurrent rate is achieved by triggering and closing of the preset threshold, so that the repeated interactive processing between the monitoring device and the CIM in this time period is reduced, thereby reducing the resource loss of the network and the CIM.

FIG. 3 is a schematic flow chart of a content control method according to a third embodiment of the present invention. As shown in FIG. 3, this embodiment may include the following steps.

In Step 301, a CIM records a third cumulative transmission amount of a second acquisition request message received in a third preset time period, in which the second acquisition request message requests the attribute metadata corresponding to the above identification information and related to a predefined policy control rule.

In Step 302, when the third cumulative transmission amount reaches a third preset threshold, the CIM returns the attribute metadata and a registered fingerprint corresponding to the above identification information to a monitoring device in a management domain of the CIM.

A daemon thread in the CIM triggers a delivery rule when it monitors that the cumulative transmission amount of the above second acquisition request message, i.e., the same content, received in the time period reaches the third preset threshold ***Threshold_Time*.** That is, the CIM returns the attribute metadata and the above registered fingerprint corresponding to the above identification information to the monitoring device, i.e., delivers all attribute metadata ***attribute_metadata*** and the registered fingerprint ***registed_fingerprint*** of the content on the CIM, in which the attribute metadata and the registered fingerprint needs to be delivered because the delivery rule is trigged.

After receiving all the attribute metadata and the registered fingerprint corresponding to the above identification information returned by the CIM, the monitoring device stores the acquired attribute metadata and registered fingerprint, and may further perform related policy control on the detected content by using the predefined policy control rule according to the above acquired and stored attribute metadata and registered fingerprint.

This embodiment is a centralized control mode, in which a rule triggering device similar to those in the above two embodiments of a content control method in the present invention is disposed on the CIM, that is, a counter triggered in a preset time period is disposed on the CIM. When the total number of requests for the same content of the monitoring devices reaches a preset threshold, the CIM triggers the delivery rule, that is, the CIM actively/voluntarily delivers all attribute metadata and the registered fingerprint related to the content to the monitoring devices in the management domain.

This embodiment is mainly the same as the above two embodiments of a content control method in the present invention, and the difference lies in that, the monitoring device triggers the counters and trigger rules in the above two embodiments, while in this embodiment, the CIM performs the time limited counting and triggers monitoring on the content, in which the CIM actively/voluntarily delivers all attribute metadata and the registered fingerprint corresponding to the above identification information, i.e., ***attribute_metadata*** and ***registed_fingerprint*** to the monitoring device in the management domain when the time limited counting threshold of the delivery rule, i.e., the third preset threshold is reached. The policy for delivering the data is to determine whether to deliver all the attribute metadata and the registered fingerprint corresponding to a certain content (identification information). When the time effect exists, that is, after the delivery rule is triggered, the CIM delivers all the attribute metadata and the registered fingerprint related to the content in a certain time period, or the delivery is performed only when the monitoring device accesses the content.

In this embodiment, when the third cumulative transmission amount of the second acquisition request message received in a second preset (2) time period reaches the preset third threshold, the CIM delivers the attribute metadata and the registered fingerprint corresponding to the identification information to the monitoring devices in the management domain of the CIM, so that the monitoring devices acquire all the attribute metadata and the registered fingerprint of the content, thereby achieving the following efficacy: At multiple concurrent accesses of the same content in the triggering time period and subsequent time periods, the monitoring devices do not need to request the related policy control attribute metadata from the CIM each time, so that the interactive processing for the repeated content with a high concurrent rate between the monitoring devices and the CIM is reduced, thereby reducing the resource loss of the network and the CIM.

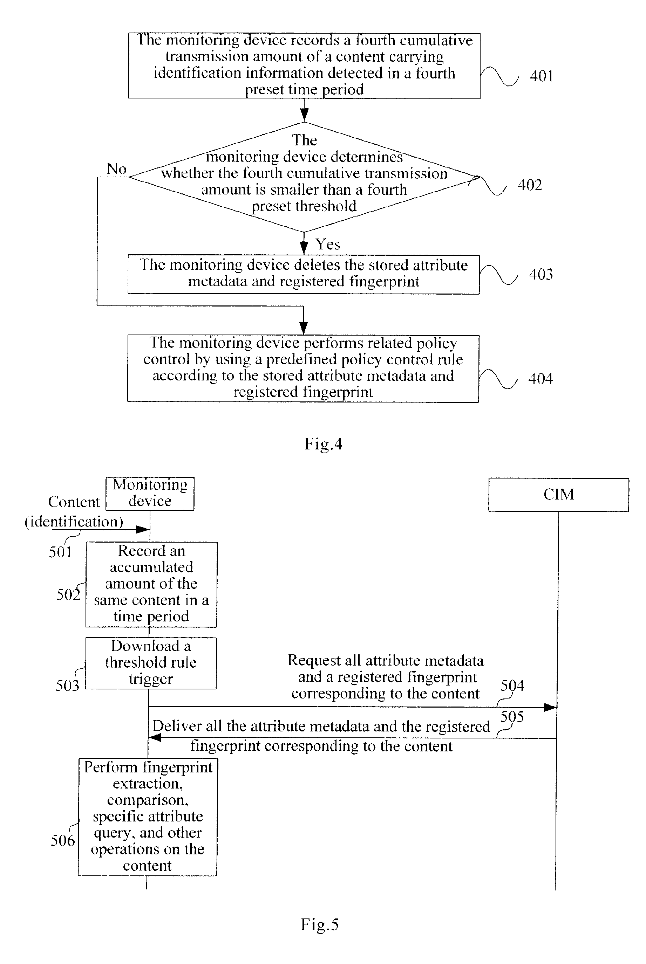

FIG. 4 is a schematic flow chart of a content control method according to a fourth embodiment of the present invention. As shown in FIG. 4, compared with the third embodiment, after the monitoring device in the management domain of the CIM receives the attribute metadata and the registered fingerprint corresponding to the above identification information returned by the CIM, the method further includes the following specific steps in this embodiment.

In Step 401, the monitoring device records a fourth cumulative transmission amount of a content whose identification information is acquirable detected in a fourth preset time period.

In Step 402, the monitoring device determines whether the fourth cumulative transmission amount is smaller than a fourth preset (3) threshold which is far smaller than the third preset threshold, and if yes, Step 403 is performed; otherwise, Step 404 is performed.

In Step 403, the monitoring device deletes the stored attribute metadata and registered fingerprint corresponding to the identification information.

In Step 404, the monitoring device performs related policy control on the detected content by using a predefined policy control rule according to the stored attribute metadata and registered fingerprint corresponding to the identification information.

In this embodiment, after the CIM delivers all attribute metadata and the registered fingerprint related to the specific content so that the monitoring device acquires and stores all the attribute metadata and the registered fingerprint related to the content, a counter that triggering a close rule in the monitoring device starts to accumulate a transmission amount of the content in the time period. When the cumulative transmission amount of the content is lower than the preset threshold at the end of the time, the close rule is triggered, that is, the monitoring device deletes all the attribute metadata and the registered fingerprint corresponding to the content (the identification information of the content) and buffered locally in the monitoring device, and original normal actions are recovered, i.e., the CIM only delivers the attribute metadata of the content related to the predefined policy control rule according to the request of the monitoring device when detecting the transmission of the content.

FIG. 5 is a signaling flow chart of a content control method according to a fifth embodiment of the present invention. As shown in FIG. 5, this embodiment may include the following steps.

In Step 501, transmission of a content of other entities (for example, a CP) is detected by a monitoring device.

In Step 502, a content (identification) counter disposed by the monitoring device records an accumulated amount of the same content in a time period, and performs the accumulation again when the accumulated amount in the time period does not reach a trigger threshold.

In Step 503, the monitoring device downloads a threshold rule trigger and activates a new request when the accumulated amount reaches a preset threshold.

In Step 504, the monitoring device sends the new request to a CIM after the threshold trigger finds that the preset threshold is reached; that is, the monitoring device requests all attribute metadata of the content triggered by the accumulated amount and a registered fingerprint corresponding to the content recorded on the CIM.

Further, the monitoring device may further send the trigger threshold to the CIM in request information.

If the CIM receives the thresholds of time period and the thresholds of amount of content sent by the monitoring device, the CIM converts set values for threshold triggering, which include a set value of the time period and a threshold of a concurrent amount, into a item of attribute metadata in a uniform unit for recording, while corresponding values from a plurality of monitoring devices are stored in the attribute metadata item after an average frequency thereof is calculated.

In Step 505, the CIM sends the attribute metadata and the registered fingerprint regarding the specific content required by the monitoring device to the monitoring device.

The monitoring device locally buffers the received attribute metadata and registered fingerprint regarding the specific content so as to use these data in a subsequent content monitoring process.

In Step 506, the content monitoring process regarding the content is performed locally, which includes fingerprint extraction, comparison, specific attribute query, and other operations, and the concurrent amount of the content in the time period is still accumulated at the same time.

Further, when the accumulated amount of the content in the time period is lower than the preset threshold, a close rule is triggered and activated, i.e., all the attribute metadata and the registered fingerprint related to the content that are buffered locally are deleted to recover the original mode in which the acquiring of the related attribute metadata is requested from the CIM when the content transmission is detected, that is, to close the dynamic data management.

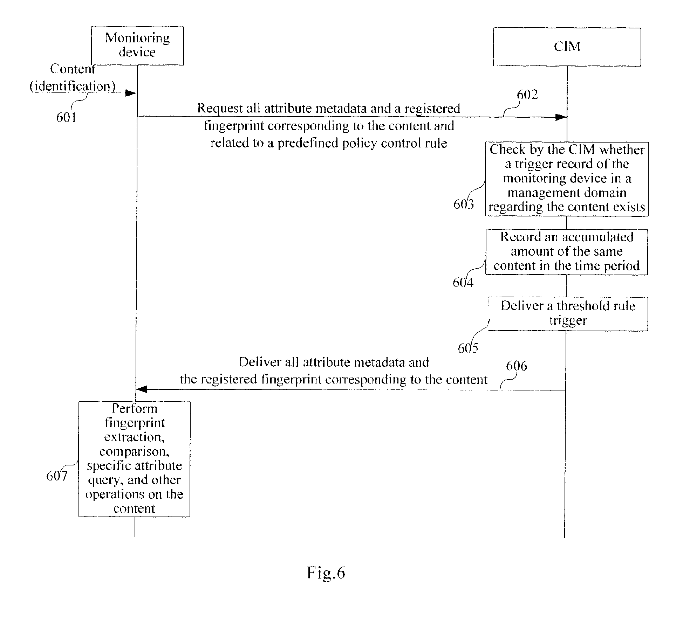

FIG. 6 is a signaling flow chart of a content control method according to a sixth embodiment of the present invention. As shown in FIG. 6, this embodiment may include the following steps.

In Step 601, transmission of a content of other entities (for example, a CP) is detected by a monitoring device.

In Step 602, after the monitoring device performs related processing on the content, that is, after extracting a content ID when a data packet includes the content ID or after extracting a fingerprint from the content when the data packet does not include the content ID, the monitoring device requests the attribute metadata related to the content from the CIM, and sends an extracted parameter value related to the content, for example, the content ID or an extracted value of the content fingerprint, to the CIM.

In Step 603, the CIM checks whether a trigger record of a monitoring device in a management domain regarding the content exists, that is, whether a record of downloading all attribute metadata and the registered fingerprint of the content exists.

The record may be a component of a response message when no delivery of the CIM is triggered subsequently.

In Step 604, a counter disposed by the CIM regarding a log of a single content and access times of the content in a time period recounts the access times of the content at the end of the time period.

In Step 605, while the CIM counts the single content, a preset rule (that is, delivering all attribute metadata and a registered fingerprint related to the content) trigger of the CIM, i.e., a threshold rule trigger, monitors an amount that increases in the time period, and triggers a delivery rule when a preset threshold is reached.

In Step 606, the CIM responds to the request of the monitoring device in the following two cases according to whether the delivery rule is triggered in Step 605; the CIM returns the attribute metadata and a trigger record value requested by the monitoring device to the monitoring device when no delivery rule is triggered, and the CIM delivers all attribute metadata and the registered fingerprint related to the content to the monitoring device when the delivery rule is triggered.

In Step 607, a content monitoring process regarding the content is performed locally, which includes fingerprint extraction, comparison, specific attribute query, and other operations, and a concurrent amount of the content in the time period is still accumulated at the same time.

Further, when the accumulated amount of the content in the time period is lower than the preset threshold, a close rule is triggered and activated, that is, all the attribute metadata and the registered fingerprint related to the content that are locally buffered are deleted to recover the original mode, in which the acquiring of the related attribute metadata is requested from the CIM when the content transmission is detected, that is, to close the dynamic data management.

The embodiment of the content control method in the distributed control mode and the embodiment of the content control method in the centralized control mode may be combined to form a new embodiment, in which rules of the two content control methods of the present invention operating together are considered comprehensively, that is, triggering the request for all attribute metadata and the registered fingerprint related to the content by the monitoring device and triggering the delivery of all attribute metadata and the registered fingerprint related to the content by the CIM. In the mixed mode, the sequence of delivering or acquiring all attribute metadata and the registered fingerprint of a certain content is determined by the rule that is triggered first: the monitoring device requests all the attribute metadata and the registered fingerprint related to the content from the CIM when the download rule of the monitoring device is triggered first, and the CIM delivers all the attribute metadata and the registered fingerprint related to the content to the monitoring device in the management domain when the delivery rule of the CIM is triggered first. The subsequent dynamic management of the monitoring device on all the attribute metadata and the registered fingerprint related to the content that are acquired and stored locally is similar, that is, when the cumulative transmission amount of the content in the time period is lower than the preset threshold, the corresponding close rule is triggered.

The thresholds for triggering rules are preset according to the following relationship: the threshold for the monitoring device to trigger the start (download) rule, the threshold for the CIM to trigger the start (delivery) rule, that is, the trigger threshold for the monitoring device to download all attribute metadata and a registered fingerprint related to a specific content is far smaller than the trigger threshold for the CIM to deliver all the attribute metadata and the registered fingerprint related to the specific content.

In the mixed mode, the triggering of the download rule and the time limited counting of the content exist in the monitoring device, and the time limited counting of the content also exists in the CIM. However, the acquisition and the delivery of all attribute metadata and the registered fingerprint of the content are related to the time limited counting that reaches the preset threshold first. If the download rule of the monitoring device is triggered first, the monitoring device sends a request to acquire all the attribute metadata and the registered fingerprint related to the content to the CIM; if the delivery rule of the CIM is triggered first, the CIM delivers all the attribute metadata and the registered fingerprint related to the content to the monitoring device; if the delivery rule of the CIM is also triggered after the download rule of the monitoring device is triggered, the monitoring device sets whether to receive all the attribute metadata and the registered fingerprint regarding the same content according to a policy. The subsequent management of all the attribute metadata and the registered fingerprint is consistent with that in the previous two modes.

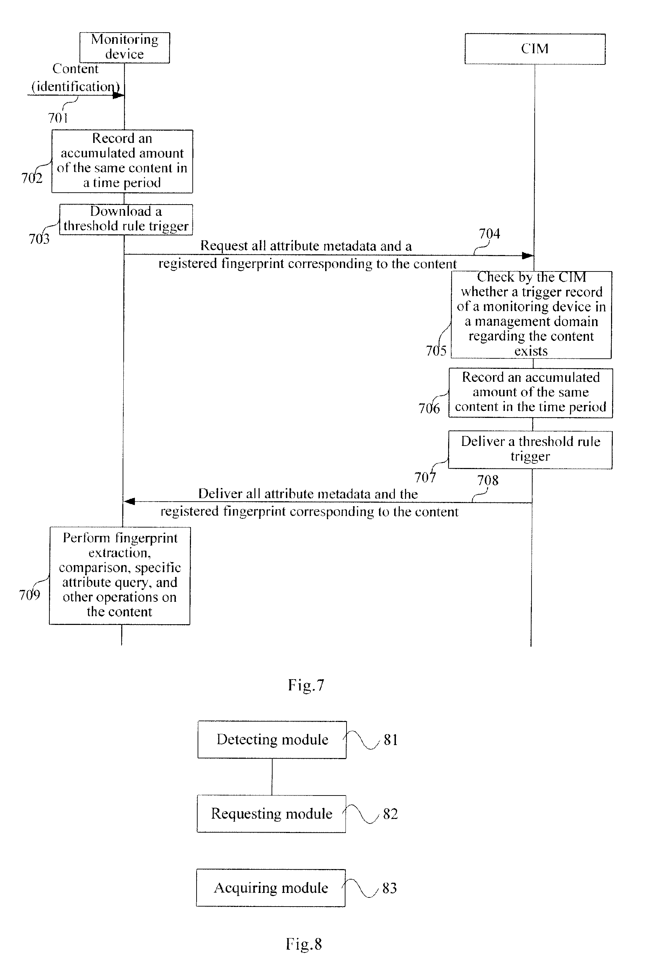

FIG. 7 is a signaling flow chart of a content control method according to a seventh embodiment of the present invention. As shown in FIG. 7, this embodiment may include the following steps.

In Step 701, transmission of a content of other entities (for example, a CP) is detected by a monitoring device.

In Step 702, a content (identification) counter disposed by the monitoring device records an accumulated amount of the same content in a time period, and performs the accumulation again when the accumulated amount in the time period does not reach a trigger threshold.

In Step 703, the monitoring device downloads a threshold trigger, and activates a new request if the related delivery of a CIM is not received when the accumulated amount reaches the preset threshold.

The sent request keeps unchanged if the related delivery of the CIM is not received when the preset threshold is not reached.

In Step 704, the monitoring device sends the new request to the CIM after the threshold trigger finds that the preset threshold is reached, that is, requests all attribute metadata of the content that is triggered by the accumulated amount and a registered fingerprint corresponding to the content recorded on the CIM.

Further, the monitoring device may also send the trigger threshold to the CIM in request information.

In Step 705, the CIM checks whether a trigger record of a monitoring device in a management domain regarding the content exists, that is, whether a record of downloading all attribute metadata and the registered fingerprint of the content exists.

The record may be a component of a response message when no delivery of the CIM is triggered subsequently.

In Step 706, a counter disposed by the CIM regarding a log of a single content and access times of the content in a time period recounts the access times of the content at the end of the time period.

In Step 707, while the CIM counts the single content, a preset rule (that is, delivering all attribute metadata and a registered fingerprint related to the content) trigger of the CIM, i.e., a threshold rule trigger, monitors an amount increase in the time period, and triggers a delivery rule when a preset threshold is reached.

In Step 708, the CIM responds to the request of the monitoring device in the following two cases according to whether the delivery rule is triggered in Step 707: the CIM returns the attribute metadata and a trigger record value requested by the monitoring device to the monitoring device when no delivery rule is triggered; and the CIM delivers all attribute metadata and the registered fingerprint related to the content to the monitoring device when the delivery rule is triggered.

In Step 709, when receiving all attribute metadata and the registered fingerprint related to a content delivered by the CIM, the monitoring device first determines whether the same data exists in the monitoring device itself, and if yes, the monitoring device does not process the data delivered by the CIM; otherwise, the monitoring device may determine whether the data still needs to be buffered according to a policy, for example, whether the related data has been buffered and deleted in a set short time.

Further, when the accumulated amount of the content in the time period is lower than the preset threshold, and when all related attribute metadata and the registered fingerprint of the content exist, a close rule is triggered and activated, that is, all the attribute metadata and the registered fingerprint related to the content buffered locally are deleted to recover the original mode, in which the acquiring of the related attribute metadata is requested from the CIM when the content transmission is detected, that is, to close the dynamic data management.

FIG. 8 is a schematic structural view of a monitoring device according to an eighth embodiment of the present invention. As shown in FIG. 8, this embodiment may include a detecting module 81, a requesting module 82, and an acquiring module 83. The detecting module 81 is adapted to detect a content whose identification information is acquirable. The requesting module 82 is adapted to send a first acquisition request message carrying the identification information to a CIM to request the attribute metadata and a registered fingerprint corresponding to the identification information when a first cumulative transmission amount of the content whose identification information is acquirable detected by the detecting module 81 in a first preset time period reaches a first preset threshold. The acquiring module 83 is adapted to acquire the attribute metadata and the registered fingerprint corresponding to the identification information returned by the CIM.

In this embodiment, when the first cumulative transmission amount of the content detected by the detecting module reaches the first preset threshold in the set time period, the requesting module triggers a start rule, that is, the requesting module initiates a first acquisition request to the CIM to request all attribute metadata and the registered fingerprint related to the content from the CIM, so as to enable the acquiring module to acquire all the attribute metadata and the registered fingerprint of the content, thereby achieving the following efficacy. At multiple concurrent accesses of the same content in the triggering and subsequent time periods, the monitoring device does not need to request the related policy control attribute metadata from the CIM each time, so that the interactive processing for the repeated content with a high concurrent rate between the monitoring device and the CIM is reduced, thereby reducing the resource loss of the network and the CIM.

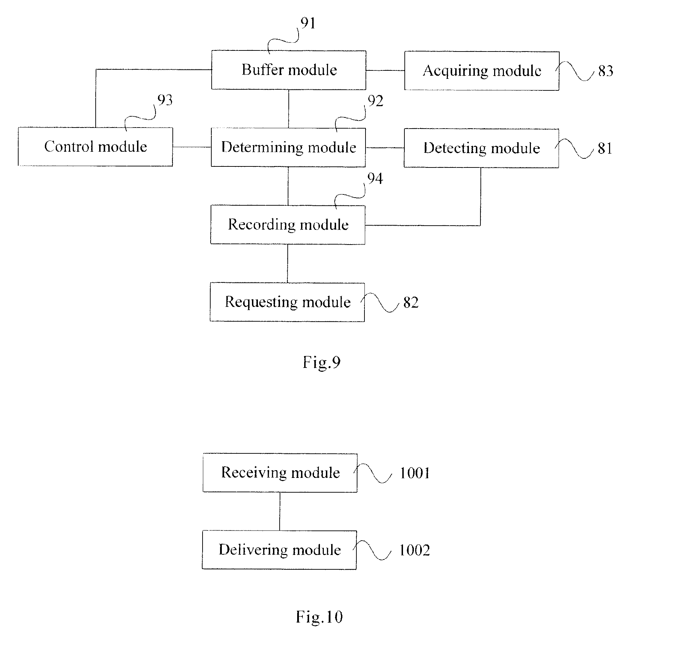

FIG. 9 is a schematic structural view of a monitoring device according to a ninth embodiment of the present invention. As shown in FIG. 9, compared with the eighth embodiment, this embodiment may further include a buffer module 91, a determining module 92, a control module 93, and a recording module 94. The buffer module 91 is adapted to store the attribute metadata and the registered fingerprint corresponding to the identification information acquired by the acquiring module 83. The determining module 92 is adapted to determine whether the buffer module 91 stores the attribute metadata and the registered fingerprint corresponding to the identification information according to the content whose identification information is acquirable detected by the detecting module 81. The control module 93 is adapted to perform related policy control on the detected content by using a predefined policy control rule according to the attribute metadata and the registered fingerprint stored by the buffer module 91 when the determining module 92 determines that the buffer module 91 stores the attribute metadata and the registered fingerprint corresponding to the identification information. The recording module 94 is adapted to record the first cumulative transmission amount of the content detected in the first preset time period when the determining module 92 determines that the buffer module 91 does not store the attribute metadata and the registered fingerprint corresponding to the identification information.

In this embodiment, when the determining module detects the transmission of the content again, the control module directly performs the related policy control locally by using the predefined policy control rule according to the attribute metadata and the registered fingerprint of the content stored by the buffer module, so that the monitoring device does not need to repeatedly interact with the CIM when the same repeated content with a high concurrent rate are transmitted.

In this embodiment, when the first cumulative transmission amount of the content detected in the first preset time period that is recorded by the recording module reaches the first preset threshold, the requesting module requests all attribute metadata and a registered fingerprint corresponding to the identification information from the CIM, so as to enable the buffer module to store all the attribute metadata and the registered fingerprint of the content acquired by the acquiring module, thereby achieving the following efficacy. At multiple concurrent accesses of the same content in the triggering and subsequent time periods, the monitoring device does not need to request the related policy control attribute metadata from the CIM each time, so that the interactive processing for the repeated content with a high concurrent rate between the monitoring device and the CIM is reduced, thereby reducing the resource loss of the network and the CIM.

This embodiment is a distributed control mode, in which the transmitted content detected by the detecting module may be a content carrying identification information of the content or not carrying the identification information. When the content does not carry the identification information, the determining module 92 may further include a functional unit (not shown) for requesting the identification information of the related content from the CIM. Specifically, the determining module 92 may include a second determining unit, an encapsulating unit, a storage unit, and a third determining unit.

The second determining unit is adapted to determine whether the content detected by the detecting module carries the identification information.

The encapsulating unit is adapted to request the identification information from the CIM and encapsulate the acquired identification information in the content when the second determining unit determines that the content detected by the detecting module does not carry the identification information.

The storage unit is adapted to store the content carrying the identification information when the second determining unit determines that the content detected by the detecting module carries the identification information, and store the content carrying the identification information generated by the encapsulating unit.

The third determining unit is adapted to determine whether the attribute metadata and the registered fingerprint corresponding to the identification information are stored according to the content carrying the identification information stored by the storage unit.

Further, the control module in this embodiment may further include a recording unit, a first determining module, a deleting unit, and a control unit.

The recording unit is adapted to record a second cumulative transmission amount of a content detected by the detecting module in the second preset time period.

The first determining unit is adapted to determine whether the second cumulative transmission amount recorded by the recording unit is smaller than a second preset threshold.

The deleting unit is adapted to delete the attribute metadata and the registered fingerprint stored by the buffer module when the first determining unit determines that the second cumulative transmission amount recorded by the recording unit is smaller than the second preset threshold.

The control unit is adapted to perform the related policy control on the detected content by using the predefined policy control rule according to the attribute metadata and the registered fingerprint stored by the buffer module when the first determining unit determines that the second cumulative transmission amount recorded by the recording unit is not smaller than the second preset threshold.

In this embodiment, when the second cumulative transmission amount regarding the specific content accumulated by the recording unit that triggers a close rule is lower than the second preset threshold, the deleting unit deletes all the attribute metadata, the registered fingerprint, and other data regarding the specific content buffered by the buffer module to recover the normal content monitoring manner, that is, whenever the detecting module detects the content transmission, the control unit requests the attribute metadata related to the predefined policy control rule from the CIM.

In the monitoring device provided in the above embodiment of the present invention, effective data management for dynamically monitoring a content with a high concurrent rate is achieved by triggering and closing according to the preset threshold, so that the repeated interactive processing between the monitoring device and the CIM is reduced, thereby reducing the resource loss of the network and the CIM.

FIG. 10 is a schematic structural view of a CIM according to a tenth embodiment of the present invention. As shown in FIG. 10, this embodiment may include a receiving module 1001 and a delivering module 1002. The receiving module 1001 is adapted to receive a second acquisition request message sent by a monitoring device, in which the second acquisition request message requests the attribute metadata corresponding to identification information of a content and related to a predefined policy control rule. The delivering module 1002 is adapted to return the attribute metadata and a registered fingerprint corresponding to the identification information of the content to the monitoring device in a management domain of the CIM when a third transmission amount of the second acquisition request message received by the receiving module 1001 in a third preset time period reaches a third preset threshold.

This embodiment is a centralized control mode, in which when the total number of requests for the same content of the monitoring devices reaches a preset threshold, the delivering module triggers a delivery rule, that is, the delivering module actively delivers all attribute metadata and a registered fingerprint related to the content to the monitoring devices in the management domain of the CIM, so that the monitoring devices acquire all the attribute metadata and the registered fingerprint of the content, thereby achieving the following efficacy. At multiple concurrent accesses of the same content in time periods subsequent to the triggering and acquisition, the monitoring devices do not need to request the related policy control attribute metadata from the CIM each time, so that the interactive processing for the repeated content with a high concurrent rate between the monitoring device and the CIM is reduced, thereby reducing the resource loss of the network and the CIM.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments are performed. The storage medium may be any medium that is capable of storing program codes, such as a read-only memory (ROM), a random access memory (RAM), a magnetic disk, and an optical disk.

Finally, it should be noted that the embodiments are merely provided for describing the technical solutions of the present invention, but are not intended to limit the present invention. Persons of ordinary skill in the art should understand that although the present invention is described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the technical solutions in the embodiments of the present invention.

## Claims

1. A content control method, comprising:
sending, by a monitoring device, a first acquisition request message carrying identification information to a content identity manager (CIM) to request attribute metadata and a registered fingerprint corresponding to the identification information when a first cumulative transmission amount of a content whose identification information is acquirable detected by the monitoring device in a first preset time period reaches a first preset threshold; and
acquiring, by the monitoring device, the attribute metadata and the registered fingerprint corresponding to the identification information returned by the CIM.

2. The method according to claim 1, further comprising: requesting, by the monitoring device, the identification information from the CIM and encapsulating the acquired identification information in the content.

3. The method according to claim 1, wherein before the first cumulative transmission amount of the content whose identification information is acquirable detected by the monitoring device in the first preset time period reaches the first preset threshold, the method further comprises: recording, by the monitoring device, the first cumulative transmission amount of the content whose identification information is acquirable detected in the first preset time period.

4. The method according to claim 3, wherein the recording the first cumulative transmission amount of the content whose identification information is acquirable detected in the first preset time period by the monitoring device further comprises:
determining, by the monitoring device, whether the attribute metadata and the registered fingerprint corresponding to the identification information are stored according to the detected content whose identification information is acquirable, and if yes, performing, by the monitoring device, related policy control on the detected content by using a predefined policy control rule according to the stored attribute metadata and registered fingerprint otherwise, recording, by the monitoring device, the first cumulative transmission amount of the content whose identification information is acquirable detected in the first preset time period.

5. The method according to claim 1, 2, 3 or 4, wherein after the monitoring device acquires the attribute metadata and the registered fingerprint corresponding to the identification information returned by the CIM, the method further comprises:
storing, by the monitoring device, the attribute metadata and the registered fingerprint corresponding to the identification information acquired, and performing related policy control on the detected content by using the predefined policy control rule according to the attribute metadata and the registered fingerprint acquired and stored.

6. The method according to claim 1, 2, 3 or 4, wherein before the monitoring device performs the related policy control on the detected content by using the predefined policy control rule according to the stored attribute metadata and registered fingerprint, the method further comprises: recording, by the monitoring device, a second cumulative transmission amount of a content detected in a second preset time period.

7. The method according to claim 6, wherein the performing the related policy control on the detected content by using the predefined policy control rule according to the stored attribute metadata and registered fingerprint by the monitoring device further comprises:
determining, by the monitoring device, whether the second cumulative transmission amount is smaller than the second preset threshold, and if yes, deleting, by the monitoring device, the stored attribute metadata and registered fingerprint; otherwise, performing, by the monitoring device, the related policy control on the detected content by using the predefined policy control rule according to the stored attribute metadata and registered fingerprint.

8. The method according to claim 1, 2, 3 or 4, wherein the first acquisition request message further carries the first preset time period and the first preset threshold.

9. The method according to claim 8, wherein the attribute metadata comprises an attribute metadata item generated by the CIM according to the received first preset time period and first preset threshold.

10. A monitoring device, comprising:
a detecting module, adapted to detect a content whose identification information is acquirable;
a requesting module, adapted to send a first acquisition request message carrying the identification information to a content identity manager (CIM) to request attribute metadata and a registered fingerprint corresponding to the identification information when a first cumulative transmission amount of the content whose identification information is acquirable detected by the detecting module in a first preset time period reaches a first preset threshold; and
an acquiring module, adapted to acquire the attribute metadata and the registered fingerprint corresponding to the identification information returned by the CIM.

11. The monitoring device according to claim 10, further comprising:
a buffer module, adapted to store the attribute metadata and the registered fingerprint corresponding to the identification information acquired by the acquiring module;
a determining module, adapted to determine whether the buffer module stores the attribute metadata and the registered fingerprint corresponding to the identification information according to the content whose identification information is acquirable detected by the detecting module;
a control module, adapted to perform related policy control on the detected content by using a predefined policy control rule according to the attribute metadata and the registered fingerprint stored by the buffer module when the determining module determines that the buffer module stores the attribute metadata and the registered fingerprint corresponding to the identification information; and
a recording module, adapted to record the first cumulative transmission amount of the content detected in the first preset time period when the determining module determines that the buffer module does not store the attribute metadata and the registered fingerprint corresponding to the identification information.

12. The monitoring device according to claim 11, wherein the control module comprises:
a recording unit, adapted to record a second cumulative transmission amount of a content detected by the detecting module in a second preset time period;
a first determining unit, adapted to determine whether the second cumulative transmission amount recorded by the recording unit is smaller than a second preset threshold, wherein the second preset threshold is smaller than or equal to the first preset threshold;
a deleting unit, adapted to delete the attribute metadata and the registered fingerprint stored by the buffer module when the first determining unit determines that the second cumulative transmission amount recorded by the recording unit is smaller than the second preset threshold; and
a control unit, adapted to perform the related policy control on the detected content by using the predefined policy control rule according to the attribute metadata and the registered fingerprint stored by the buffer module when the first determining unit determines that the second cumulative transmission amount recorded by the recording unit is not smaller than the second preset threshold.

13. The monitoring device according to claim 11, wherein the determining module comprises:
a second determining unit, adapted to determine whether the content detected by the detecting module carries the identification information;
an encapsulating unit, adapted to request the identification information from the CIM and encapsulate the acquired identification information in the content when the second determining unit determines that the content detected by the detecting module does not carry the identification information;
a storage unit, adapted to store the content carrying the identification information when the second determining unit determines that the content detected by the detecting module carries the identification information, or store the content carrying the identification information generated by the encapsulating unit; and
a third determining unit, adapted to determine whether the attribute metadata and the registered fingerprint corresponding to the identification information are stored according to the content carrying the identification information stored by the storage unit.

14. A content control method, comprising:
returning, by a content identity manager (CIM), attribute metadata and a registered fingerprint corresponding to identification information to a monitoring device in a management domain of the CIM when a third cumulative transmission amount of a second acquisition request message received by the CIM in a third preset time period reaches a third preset threshold, wherein the second acquisition request message requests the attribute metadata corresponding to the identification information of a content and related to a predefined policy control rule.

15. The method according to claim 14, wherein before the third transmission amount of the second acquisition request message received by the CIM in the third preset time period reaches the third preset threshold, the method further comprises: recording, by the CIM, the third cumulative transmission amount of the second request message received in the third preset time period.

16. The method according to claim 14 or 15, further comprising: recording, by the monitoring device, a fourth cumulative transmission amount of the content whose identification information is acquirable detected in a fourth preset time period.

17. The method according to claim 16, wherein after the monitoring device records the fourth cumulative transmission amount of the content whose identification information is acquirable detected in the fourth preset time period, the method further comprises:
determining, by the monitoring device, whether the fourth cumulative transmission amount is smaller than a fourth preset threshold, and if yes, deleting, by the monitoring device, the stored attribute metadata and registered fingerprint.

18. A content identity manager (CIM), comprising:
a receiving module, adapted to receive a second acquisition request message sent by a monitoring device, wherein the second acquisition request message requests attribute metadata corresponding to identification information of a content and related to a predefined policy control rule; and
a delivering module, adapted to return the attribute metadata and a registered fingerprint corresponding to the identification information of the content to the monitoring device in a management domain of the CIM when a third transmission amount of the second acquisition request message received by the receiving module in a third preset time period reaches a third preset threshold.
